(19) Europäisches Patentamt
European Patent Office
Office européen des brevets

(11) EP 4 399 237 B1

(12) EUROPEAN PATENT SPECIFICATION

(45) Date of publication and mention of the grant of the patent:
**23.07.2025 Bulletin 2025/30**

(21) Application number: **22777497.3**

(22) Date of filing: **21.07.2022**

(51) International Patent Classification (IPC):
***C08G 77/44*** *(2006.01)* ***C09J 183/10*** *(2006.01)*
***B32B 9/04*** *(2006.01)*

(52) Cooperative Patent Classification (CPC):
**C09J 183/10; C08G 77/44**

(86) International application number:
**PCT/US2022/074006**

(87) International publication number:
**WO 2023/039317 (16.03.2023 Gazette 2023/11)**

(54) **METHOD FOR PREPARATION OF A LAMINATE ARTICLE INCLUDING A SILICONE PRESSURE SENSITIVE ADHESIVE ADHERED TO SILICONE RUBBER**

VERFAHREN ZUR HERSTELLUNG EINES LAMINATARTIKELS MIT EINEM AN SILIKONKAUTSCHUK HAFTENDEN SILIKONHAFTKLEBER

PROCÉDÉ DE PRÉPARATION D’UN ARTICLE STRATIFIÉ COMPRENANT UN ADHÉSIF SENSIBLE À LA PRESSION DE SILICONE ADHÉRANT AU CAOUTCHOUC DE SILICONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2021 US 202163241550 P**
**28.04.2022 US 202263335733 P**

(43) Date of publication of application:
**17.07.2024 Bulletin 2024/29**

(73) Proprietor: **Dow Silicones Corporation**
**Midland, Michigan 48686 (US)**

(72) Inventors:
- **LUO, Binbin**
  **Midland, Michigan 48686-0994 (US)**
- **MITCHELL, Timothy**
  **Midland, Michigan 48686-0994 (US)**

(74) Representative: **Beck Greener LLP**
**Fulwood House**
**12 Fulwood Place**
**London WC1V 6HR (GB)**

(56) References cited:
**US-A- 5 726 256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### FIELD

This invention relates to a method for preparing a silicone pressure sensitive adhesive composition that can be cured to form a silicone pressure sensitive adhesive with good adhesion to silicone rubber. More particularly, this invention relates to a method for preparing a peroxide curable silicone pressure sensitive adhesive composition that cures to form a silicone pressure sensitive adhesive. A laminate article includes the silicone pressure sensitive adhesive adhered to an article comprising silicone rubber.

### INTRODUCTION

U.S. Patent 8,247,502 discloses an addition reaction-curable silicone pressure-sensitive adhesive composition. However, addition reaction curable silicone pressure sensitive adhesive compositions can suffer from the drawback of insufficient adhesion to silicone rubbers, e.g., typically ≤ 1,000 gf/inch. U.S. Patent 5,726,256 discloses a method of making silicone pressure sensitive adhesives.

Current commercially available silicone pressure sensitive adhesives may suffer from the drawback of providing relatively weak adhesion strength to silicone rubber substrates. This weak adhesion often fails to meet the application needs where silicone pressure sensitive adhesives are used to bond to silicone rubbers, such as in electronics, automotive, and masking tape applications.

### SUMMARY

A method for fabricating a laminate article is provided. The method comprises:

(a) combining, under conditions to effect condensation reaction, starting materials comprising

(P) a bis-hydroxyl-terminated polydiorganosiloxane with a weight average molecular weight of 10,000 g/mol to < 200,000 g/mol measured by GPC,

(R) a hydroxyl-functional polyorganosilicate resin with a weight average molecular weight of 21,000 g/mol to 30,000 g/mol measured by GPC, where starting materials (R) and (P) and are present in a weight ratio

$$(R)/(P) \text{ of } 2.27/1 \text{ to } < 3.88/1;$$

and

(S) a solvent, thereby producing a reaction mixture;

(b) adding (C) a condensation reaction catalyst to the reaction mixture, thereby producing a catalyzed reaction mixture;

(c) heating the catalyzed reaction mixture at a temperature of > RT to 145 °C and removing water, thereby forming a silicone pressure sensitive adhesive composition;

(d) coating the silicone pressure sensitive adhesive composition on a surface of a backing substrate,

(e) drying the silicone pressure sensitive adhesive composition,

(f) curing the silicone pressure sensitive adhesive composition to form a silicone pressure sensitive adhesive layer having a surface adhered to the surface of the backing substrate, where the silicone pressure sensitive adhesive layer further comprises an opposing surface opposite the surface of the backing substrate; and

(g) adhering the opposing surface of silicone pressure sensitive adhesive and the surface of the silicone rubber article. A laminate article comprising the silicone pressure sensitive adhesive adhering to the silicone rubber article can be prepared by the method.

### BRIEF DESCRIPTION OF THE DRAWING

Figure 1 shows a partial cross section of a laminate article 100.

Figure 2 shows a partial cross section of a laminate article 200.

*Reference Numerals*

| | |
|---|---|
| 100 | partial cross section of a laminate article |
| 101 | backing substrate |
| 101b | surface of backing substrate 101 |
| 102 | silicone pressure sensitive adhesive |
| 102a | surface of silicone pressure sensitive adhesive 102 |
| 102b | opposing surface of silicone pressure sensitive adhesive 102 |
| 103 | silicone rubber article |
| 103a | surface of silicone rubber article 103 |
| 200 | partial cross section of a laminate article |
| 201 | backing substrate comprising a silicone rubber |
| 201b | surface of backing substrate 201 |
| 202 | silicone pressure sensitive adhesive |
| 202a | surface of silicone pressure sensitive adhesive 202 |
| 202b | opposing surface of silicone pressure sensitive adhesive 202 |

DETAILED DESCRIPTION

A method for fabricating a laminate article comprises:

(1) combining, under conditions to effect condensation reaction, starting materials comprising

(P) a bis-hydroxyl-terminated polydiorganosiloxane with a weight average molecular weight of 10,000 g/mol to < 200,000 g/mol measured by GPC, where starting material (P) is present in an amount of > 20.5 weight % based on combined weights of starting materials (P) and (R);
(R) a hydroxyl-functional polyorganosilicate resin with a weight average molecular weight of 21,000 g/mol to 30,000 g/mol measured by GPC, where starting material (R) is present in an amount < 79.5 weight %, based on combined weights of starting materials (P) and (R);
(S) a solvent; and
optionally (N) a neutralizer; where
starting materials (R) and (P) and are present in a weight ratio (R)/(P) of 2.27/1 to < 3.88/1; thereby producing a reaction mixture; and

(2) adding (C) a condensation reaction catalyst to the reaction mixture, thereby producing a catalyzed reaction mixture;
(3) heating the catalyzed reaction mixture at a temperature of > RT to 145 °C and removing water;

optionally (4) recovering a condensation reaction product of (P) and (R);
optionally (5) adding up to 4 weight %, based on combined weights of (R) and (P), of (X) a peroxide crosslinking agent, thereby forming a silicone pressure sensitive adhesive composition;
optionally (6) treating a surface of a backing substrate;

(7) coating the silicone pressure sensitive adhesive composition on the surface of the backing substrate,
(8) drying the silicone pressure sensitive adhesive composition,
(9) curing the silicone pressure sensitive adhesive composition to form a silicone pressure sensitive adhesive layer having a surface adhered to the surface of the backing substrate, where the silicone pressure sensitive adhesive layer further comprises an opposing surface opposite the surface of the backing substrate;

optionally (10) treating a surface of a silicone rubber article; and
(11) adhering the opposing surface of silicone pressure sensitive adhesive and the surface of the silicone rubber article.

Step (1) of the method described above may be performed by any convenient means, such as mixing starting materials comprising (P), (R), (S), and optionally (N) as introduced above and described in detail below, in a batch reactor, optionally with an agitator and jacketing. The condensation reaction may be performed at a temperature of 20 °C to 150 °C,

alternatively RT to the reflux temperature of starting material (S), the solvent. The time for reaction depends on various factors including the selection of starting materials and the temperature, however, condensation reaction in step (1) may be performed in, e.g., 0.5 hour to 20 hours, alternatively 1 hour to 10 hours. The condensation reaction may be performed as described, for example, in U.S. Patent 5,916,981 to Cifuentes, et al., by varying the appropriate starting materials to those described below.

*(P) Bis-Hydroxyl Terminated Polydiorganosiloxane*

Starting material (P) is the bis-hydroxyl terminated polydiorganosiloxane (Polymer) used in step (1). This Polymer may have formula

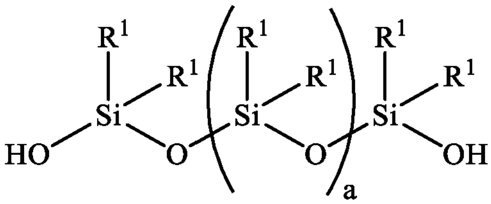

,

where each $R^1$ is an independently selected alkyl group of 1 to 6 carbon atoms, and subscript a represents average number of difunctional siloxane units per molecule, and $250 \leq a \leq 3,000$, alternatively $270 \leq a \leq 2,000$. Alternatively, subscript a may be at least 250, alternatively at least 270, alternatively at least 300, alternatively, at least 350, alternatively at least 400, alternatively at least 450, and alternatively at least 500, while at the same time, subscript a may be up to 3,000, alternatively up to 2,500, alternatively up to 2,100, alternatively up to 2,000, alternatively up to 1,900, and alternatively up to 1,800. Examples of alkyl groups for $R^1$ include methyl, ethyl, propyl (including n-propyl and isopropyl), butyl (including n-butyl, tert-butyl, sec-butyl, and isobutyl), pentyl (including n-pentyl, cyclopentyl, and branched isomers with 5 carbon atoms), and hexyl (including n-hexyl, cyclohexyl, and branched isomers with 6 carbon atoms). Alternatively, each $R^1$ may be methyl or ethyl; alternatively methyl.

Suitable Polymers for starting material (A) are known in the art and are commercially available from various sources, such as Gelest Inc. of Morrisville, Pennsylvania, USA, and DSC. Examples of suitable Polymers include bis-hydroxyl terminated polydimethylsiloxanes with Mw of 20,000 g/mol to 150,000 g/mol; alternatively 40,000 g/mol to 135,000 g/mol, where Mw can be measured by GPC.

*(R) Polyorganosilicate Resin*

Starting material (R) is the hydroxyl-functional polyorganosilicate resin (Resin) used in step (1). The Resin comprises monofunctional units of formula $R^1_3SiO_{1/2}$ and tetrafunctional silicate units ("Q" units) of formula $SiO_{4/2}$, where $R^1$ is as described above. Alternatively, the monofunctional units may be exemplified by M units of formula ($Me_3SiO_{1/2}$). The polyorganosilicate resin is soluble in solvents such as those described below as starting material (S), exemplified by aliphatic and/or aromatic hydrocarbons, such as benzene, toluene, xylene, ethyl benzene, heptane, and combinations thereof.

When prepared, the Resin comprises the monofunctional and tetrafunctional units described above, and the Resin further comprises units with silicon bonded hydroxyl groups and may comprise neopentamer of formula $Si(O-SiR^1_3)_4$, where $R^1$ is as described above, *e.g.,* the neopentamer may be tetrakis(trimethylsiloxy)silane. The concentration of silanol groups present in the Resin may be determined using FTIR spectroscopy according to ASTM Standard E-168-16. Molar ratio of monofunctional and tetrafunctional units, where said ratio is expressed as {M(resin)}/{Q(resin)}, or M:Q, excluding monofunctional and tetrafunctional units from the neopentamer. M:Q ratio represents the molar ratio of the total number of triorganosiloxy groups (monofunctional units) of the resinous portion of the polyorganosilicate resin to the total number of silicate groups (Q units) in the resinous portion. M:Q ratio may be 0.5:1 to 1.5:1.

The Mn of the polyorganosilicate resin depends on various factors including the types of alkyl groups represented by $R^1$ that are present. The Mn of the polyorganosilicate resin refers to the number average molecular weight measured using GPC, when the peak representing the neopentamer is excluded from the measurement. The Mn of the polyorganosilicate resin may be greater than 3,000 Da, alternatively >3,000 to 8,000 Da. Alternatively, Mn of the polyorganosilicate resin may be 3,500 to 8,000 Da. The Mw of the polyorganosilicate resin refers to the weight average molecular weight measured using GPC. The Mw of the polyorganosilicate resin must be 20,000 Da to 30,000 Da, and alternatively 21,000 g/mol to 29,500 g/mol.

The polyorganosilicate resin can be prepared by any suitable method, such as cohydrolysis of the corresponding silanes or by silica hydrosol capping methods. The polyorganosilicate resin may be prepared by silica hydrosol capping

processes such as those disclosed in U.S. Patent 2,676,182 to Daudt, et al.; U.S. Patent 4,611,042 to Rivers-Farrell et al.; and U.S. Patent 4,774,310 to Butler, et al. The method of Daudt, et al. described above involves reacting a silica hydrosol under acidic conditions with a hydrolyzable triorganosilane such as trimethylchlorosilane, a siloxane such as hexamethyldisiloxane, or mixtures thereof, and recovering a copolymer having monofunctional units and Q units. The resulting copolymers generally contain from 2 to 5 percent by weight of hydroxyl groups.

The intermediates used to prepare the polyorganosilicate resin may be triorganosilanes and silanes with four hydrolyzable substituents or alkali metal silicates. The triorganosilanes may have formula $R^1_3SiX^1$, where $R^1$ is as described above and $X^1$ represents a hydrolyzable substituent such as hydroxyl. Silanes with four hydrolyzable substituents may have formula $SiX^2_4$, where each $X^2$ is halogen, alkoxy or hydroxyl. Suitable alkali metal silicates include sodium silicate.

The Resin selected for starting material (R) may have unit formula $(R^1_3SiO_{1/2})_b(SiO_{4/2})_c(HO_{1/2})_d$, where each $R^1$ is an independently selected alkyl group of 1 to 6 carbon atoms as described above, subscripts b and c represent mole fractions of monofunctional and tetrafunctional units, respectively, and subscripts b and c have values such that $0.4 \leq b \leq 0.5$, $0.5 \leq c \leq 0.6$, and a quantity $(b + c) = 1$; subscript d represents a quantity of hydroxyl groups in the Resin, and subscript d has a value sufficient to provide the Resin with a hydroxyl content of 2 weight % to 5 weight %. The Resin must have Mw of 20,000 g/mol to 30,000 g/mol, alternatively 21,000 g/mol to 30,000 g/mol, alternatively 21,000 g/mol to 29,500 g/mol, and alternatively 21,000 g/mol to 29,100 g/mol. Suitable Resins are known in the art and are commercially available, e.g., from DSC.

The Resin (R) and Polymer (P) are present in a weight ratio (R)/(P) of > 2.27/1 to < 3.88/1. Alternatively, (R)/(P) may be 2.9/1 to < 3.88/1, and alternatively (R)/(P) may be 2.9/1 to 3/1. Without wishing to be bound by theory, it is thought that (R)/(P) of ≤ 2.27/1 may result in a silicone pressure sensitive adhesive that has insufficient adhesion to silicone rubber, however, (R)/(P) of > 3.88/1 may result in a silicone pressure sensitive adhesive that is glassy and also lacks sufficient adhesion to silicone rubber.

*(S) Solvent*

Starting material (S) is a solvent. The solvent may be added during step (1) and optionally a later step, e.g., step (2), to facilitate introduction of certain starting materials, such as (R) the Resin. Solvents that can be used herein are those that help fluidize the starting materials but essentially do not react with the starting materials. The solvent may be selected based on solubility the starting materials and volatility of the solvent. The solubility refers to the solvent being sufficient to dissolve and/or disperse a starting material. Volatility refers to vapor pressure of the solvent. Without wishing to be bound by theory, it is thought that if the solvent is too volatile (having too high vapor pressure) the solvent may volatilize out of the reaction mixture during step (3) too quickly. However, if the solvent is not volatile enough (too low vapor pressure) too much of the solvent may remain in the condensation reaction product prepared in step (3) and/or water produced as a side product of the condensation reaction may be insufficiently removed during step (3), and when present, step (4).

Suitable solvents include polyorganosiloxanes with suitable vapor pressures, such as hexamethyldisiloxane, octamethyltrisiloxane, hexamethylcyclotrisiloxane and other low molecular weight polyorganosiloxanes, such as 0.5 to 1.5 cSt DOWSIL™ 200 Fluids and DOWSIL™ OS FLUIDS, which are commercially available from DSC.

Alternatively, the solvent may comprise an organic solvent. The organic solvent can be a ketone such as acetone, methylethyl ketone, or methyl isobutyl ketone; an aromatic hydrocarbon such as benzene, toluene, ethylbenzene or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether, a halogenated hydrocarbon such as dichloromethane, 1,1,1-trichloroethane or methylene chloride; chloroform; dimethyl sulfoxide; dimethyl formamide, acetonitrile; tetrahydrofuran; white spirits; mineral spirits; naphtha; n-methyl pyrrolidone; or a combination thereof.

The amount of solvent will depend on various factors including the type of solvent selected and the amount and type of other starting materials selected for use in the method. However, the amount of solvent may range from 1 % to 99%, alternatively 2 % to 90 %, based on the weight of all starting materials in step (1). All or a portion of the solvent may optionally be removed during and/or after step (3). For example, water may form as a side product of the condensation reaction in steps (2) and (3). To progress the reaction, some or all of the water may be removed, e.g., via azeotropic distillation with the solvent.

*(N) Neutralizing Agent*

Starting material (N), the neutralizing agent, is optional. The neutralizing agent may comprise a silyl phosphate. Without wishing to be bound by theory, it is thought that the neutralizing agent may be added to scavenge impurities in (R) the Resin and/or (P) the Polymer, described above, before condensation reaction thereof. The neutralizing agent may be, for example, a silyl phosphate. Silyl phosphates, such as bis(trimethylsilyl) hydrogen phosphate, are commercially

available from DSC.

The amount of neutralizing agent depends on various factors including the type of (P) the Polymer and (R) the Resin selected, however, the amount of neutralizer may be 0.005% to 0.02% based on combined weights of starting materials (P), (R), (C), and (N).

*(C) Condensation Reaction Catalyst*

Starting material (C) added in step (2) is a condensation reaction catalyst that can catalyze condensation reaction of the hydroxyl groups of (P) the Polymer and (R) the Resin, described above. The condensation reaction catalyst is not specifically restricted and may comprise an acid, or a base condensation reaction catalyst. For example, suitable base catalysts include metal hydroxides such as lithium hydroxide, sodium hydroxide, potassium hydroxide and calcium hydroxide, carbonates such as sodium carbonate and potassium carbonate, bicarbonates such as sodium bicarbonate and potassium bicarbonate, metal alkoxides such as sodium methoxide and potassium butoxide, organometallic compounds such as butyl lithium, potassium silanolate, and nitrogen compounds such as ammonia gas, ammonia water, methylamine, trimethylamine and triethylamine. Alternatively, the condensation reaction catalyst may be an acid, e.g., organic acids such as acetic acid, benzoic acid, octanoic acid and citric acid, and mineral acids such as hydrochloric acid, sulfuric acid and phosphoric acid, are suitable. Alternatively, the condensation reaction catalyst may be an acid catalyst, such as an organic acid, e.g., benzoic acid.

Suitable condensation reaction catalysts are commercially available from various sources, e.g., Sigma Aldrich, Inc. of St. Louis, Missouri, USA and Acros. The amount of catalyst depends on various factors including the type of catalyst select and the temperature for step (1), however, the amount of catalyst may be 0.1% to 0.5% based on combined weights of starting materials (P), (R), (C), and (N).

Step (4) in the method described above is optional. After a condensation reaction product of (P) the Polymer and (R) the Resin forms, the condensation reaction product may further comprise unreacted starting materials, solvent, and water as a side product. In step (4), the condensation reaction product may be recovered, e.g., the solvent, water, and unreacted starting materials may be removed, e.g., by distillation and/or stripping optionally with heating and/or reduced pressure.

Step (5) in the method described above is optional. The reaction product after step (3), or step (4), when present, may be used to form a silicone pressure sensitive adhesive composition. Alternatively, (X) a peroxide crosslinking agent may be added in step (5) to form the silicone pressure sensitive adhesive composition which may cure faster than when the peroxide crosslinking agent is not present, provided other conditions such as temperature are kept constant.

*(X) Peroxide crosslinking agent*

Starting material (X) added when step (5) is present is a peroxide crosslinking agent. The peroxide crosslinking agent may be an organic peroxide or a hydroperoxide, such as benzoyl peroxide; 4-monochlorobenzoyl peroxide; t-butylperoctoate; t-butyl peroxybenzoate, tert-butylperoxybenzoate, tert-butyl cumyl peroxide, tert-butyloxide 2,5-dimethyl-2,5-di-tert-butylperoxyhexane; 2,4-dichlorobenzoyl peroxide; di-tertbutylperoxy-diisopropyl benzene; 1,1-bis(tert-butylperoxy)-3,3,5-trimethylcyclohexane; 2,5-di-tert-butylperoxyhexane-3,2,5-dimethyl-2,5-bis(tert-butylperoxy) hexane; cumyl-tert-butyl peroxide; dicumyl peroxide; di-t-butyl peroxide; t-butyl hydroperoxide; cumene hydroperoxide; di-t-amyl peroxide; and combinations of two or more thereof. Additionally, di-peroxide peroxide crosslinking agents may be used alone or in combination with other di-peroxide crosslinking agents. Such di-peroxide peroxide crosslinking agents include, but are not limited to, 1,4-bis-(t-butyl peroxycarbo)cyclohexane; 1,2-di(t-butyl peroxy)cyclohexane; and 2,5-di(t-butyl peroxy)-3-hexyne. Suitable peroxide crosslinking agents for use as starting material (X) are known in the art and are commercially available from various sources, such as Sigma-Aldrich, Inc. of St. Louis, Missouri, USA.

Starting material (X) may comprise one peroxide crosslinking agent or a combination of two or more peroxide crosslinking agents. The amount of starting material (X) added in step (5) depends on various factors including the type and amount of peroxide crosslinking agent selected and the selection of (P) the Polymer and (R) the Resin, however, the amount of peroxide crosslinking agent, when present, may be 0.1 weight % to 4 weight %, alternatively 1 weight % to 4 weight %, and alternatively 2 weight % to 3 weight %, based on combined weights of starting materials (P), (R), (C), and (S).

Step (6) in the method described herein is optional. However, step (6) may be included in the method to improve bonding of the silicone pressure sensitive adhesive to the backing substrate. Therefore, the method for forming the adhesive article may optionally further comprise (6) treating a surface of the backing substrate before applying the silicone pressure sensitive adhesive composition. Treating the surface may be performed by any convenient means, such as applying a primer, or subjecting the surface to corona-discharge treatment, etching, or plasma treatment before applying the silicone pressure sensitive adhesive composition to the surface. Alternatively, treating the surface may comprise applying a primer to the surface of the backing substrate.

Step (7), coating the silicone pressure sensitive adhesive composition on the surface of the backing substrate

can be performed by any convenient means. For example, the silicone pressure sensitive adhesive composition may be applied by gravure coater, comma coater, offset coater, offset-gravure coater, roller coater, reverse-roller coater, air-knife coater, slot die, or curtain coater.

In the method described herein, steps (7) to (9) may be performed via wet casting or via dry casting. In wet casting, the silicone pressure sensitive adhesive layer may be permanently adhered to the backing substrate, such as the polymeric films and/or foams described below.

The backing substrate can be any material that can withstand the curing conditions used in step (9) to cure the silicone pressure sensitive adhesive composition to form the silicone pressure sensitive adhesive on the surface of the backing substrate. For example, any backing substrate that can withstand heat treatment at a temperature equal to or greater than 120°C, alternatively 150°C is suitable. Examples of materials suitable for such backing substrates including polymeric films and/or foams, which may be comprised of polyimide (PI), polyetheretherketone (PEEK), polyethylene naphthalate (PEN), liquid-crystal polyarylate, polyamideimide (PAI), polyether sulfide (PES), polyethylene terephthalate (PET), polycarbonate (PC), polymethylmethacrylate (PMMA), thermoplastic polyurethane (TPU), thermoplastic elastomer (TPE), polyethylene (PE), or polypropylene (PP). Alternatively, the backing substrate may be glass. Alternatively, the backing substrate may be a release liner, for example, when the silicone pressure sensitive adhesive will be used in a dry casting method. The thickness of the backing substrate is not critical; however, the thickness may be 5 μm to 300 μm, alternatively 10 μm to 200 μm. Alternatively, the backing substrate used in step (7) may be selected from the group consisting of PE, PU, TPE, and TPU.

Step (8) of the method comprises drying the silicone pressure sensitive adhesive composition. Drying may be performed by any convenient means, such as heating at a temperature and for a time sufficient to vaporize all or a portion of the solvent but insufficient to fully cure the silicone pressure sensitive adhesive composition. For example, drying may be performed by, e.g., heating at a temperature of 50 °C to 120°C, alternatively 70 °C to 100 °C, and alternatively 70 °C to 80 °C for a time sufficient to remove all or a portion of the solvent (e.g., 30 seconds to 1 hour, alternatively 1 minute to 5 minutes).

After drying, the method further comprises step (9), curing the silicone pressure sensitive adhesive composition to form a laminate article comprising a silicone pressure sensitive adhesive layer having a surface adhered to the surface of the backing substrate, where the silicone pressure sensitive adhesive layer further comprises an opposing surface opposite the surface of the backing substrate.

Curing the pressure sensitive adhesive composition in step (9) may be performed by heating at a temperature of 80 °C to 200 °C, alternatively 90 °C to 210 °C, alternatively 150 °C to 205 °C, and alternatively 180 °C to 205 °C for a time sufficient to cure the pressure sensitive adhesive composition (*e.g.,* for 30 seconds to an hour, alternatively 1 to 5 minutes). If cure speed needs to be increased or the process oven temperatures lowered, the amount of (X) the peroxide crosslinking agent can be increased. This forms a silicone pressure sensitive adhesive on the surface of the backing substrate. Curing may be performed by placing the coated backing substrate in an oven. The amount of the silicone pressure sensitive adhesive composition to be coated on the backing substrate depends on the specific application, however, the amount may be sufficient such that, after curing, thickness of the silicone pressure sensitive adhesive may be 5 micrometers to 100 micrometers.

The method described herein may optionally further comprise an additional step after step (9). The additional step comprises applying a removable release liner to the opposing surface of the silicone pressure sensitive adhesive layer opposite the backing substrate, e.g., to protect the silicone pressure sensitive adhesive before use (e.g., when the backing substrate is a polymeric film and/or foam, or glass). The release liner may be applied before, during or after curing the silicone pressure sensitive adhesive composition; alternatively after curing.

The silicone pressure sensitive adhesive prepared in step (9) will adhere to a silicone rubber article. Without wishing to be bound by theory, it is thought that the silicone pressure sensitive adhesive prepared in step (9) may have adhesion to silicone rubber > 1,000 gf/in, alternatively > 1,200 gf/in, alternatively > 1,500 gf/in, while at the same time adhesion may be up to 2,600 gf/in, alternatively up to 2,500 gf/in, alternatively up to 2,300 gf/in, when tested according to the peel adhesion test method described in the EXAMPLES, below.

While treatment of the silicone rubber article is not required for this adhesion, the method may optionally further comprise step (10), treating a surface of the silicone rubber article, which may facilitate and/or improve adhesion of the silicone pressure sensitive adhesive to the surface of the silicone rubber article. Treating the surface of the silicone rubber article may be performed by any convenient means, such as cleaning the surface of the silicone rubber, e.g., with an alcohol such as isopropanol, or any of the surface treatments described above in step (6).

The silicone rubber article is not specifically restricted. The silicone rubber article may have a durometer, Shore A, of 30 to 75, alternatively 30 to 50, measured by ASTM D2240. Liquid silicone rubbers (LSRs) and high consistency rubbers (HCRs) may be used for the silicone rubber article. LSRs are known in the art and may be made by known methods, such as those disclosed in U.S. Patent 5,777,002 to Conway, et al. or U.S. Patent 8,198,357 to Jeram, et al. Alternatively, the silicone rubber article may be selected based on the desired end use for the laminate article prepared herein.

For example, optical silicone elastomers (optical LSRs) are known in the art and are described, for example, in U.S. Patent 8,859,693 to Hasegawa, et al. and U.S. Patent 8,853,332 to Akitomo, et al. Optical LSRs are commercially

available. For example, optical LSRs include SILASTIC™ MS-1001, MS-1002, MS-1003, MS-4001, MS-4002, and MS-4007, which are moldable optical silicone elastomers, and SYLGARD™ 182, 184, and 186 are other optical silicone elastomers, all of which are commercially available from DSC.

Alternatively, an LSR such as, XIAMETER™ RBL-2004-30, XIAMETER™ RBL-2004-50 SILASTIC™ 9202-50 LSR, SILASTIC™ LCF 3760, and SILASTIC™ LCF 3600, or an HCR such as Varox™ DBPH-50 from TDCC, or SILASTIC™ RBC 7600-50, XIAMETER™ RBB 2000-35, XIAMETER™ RBB 2001-65, XIAMETER™ RBB-2030-40EN, XIAMETER™ RBB-6660-60EN, XIAMETER™ RBB-2002-30 Base, XIAMETER™ RBB-2004-60, or XIAMETER™ RBB-2220-70, each from DSC, may be used.

The method described herein further comprises step (11), adhering the opposing surface of silicone pressure sensitive adhesive, as described in step (9), and the surface of the silicone rubber article. Step (11) may be performed by any convenient means, such as contacting the surface of the silicone rubber article and the opposing surface of the silicone pressure sensitive adhesive and applying pressure. If a release liner is used to protect the opposing surface of the silicone pressure sensitive adhesive, the release liner is removed before contacting the surface of the silicone rubber article and the opposing surface of the silicone pressure sensitive adhesive. The resulting product prepared in step (11) is a laminate article. In the wet casting method described above, the laminate article may comprise a backing substrate selected from a polymeric film, a polymeric foam or glass; the silicone pressure sensitive adhesive described above, and a silicone rubber article.

Alternatively, when dry casting is used in steps (7) to (9) described above, the backing substrate comprises a release liner. The release liner may be removed after step (9) to form the silicone pressure sensitive adhesive layer as a free standing film. Alternatively, the release liner may be removed after step (11). When dry casting is performed, the method may further comprise:

optionally (12) treating a surface of a second silicone rubber article; and
(13) adhering the surface of the silicone pressure sensitive adhesive layer (exposed via removal of the release liner) to the surface of the second silicone rubber article.

The second silicone rubber article is as described above for use in step (11). The second silicone rubber article may be the same as the silicone rubber article used in step (11). Alternatively, the second silicone rubber article may be different from the silicone rubber article used in step (11). In this instance, the laminate article formed by the method has a silicone pressure sensitive adhesive layer sandwiched between the silicone rubber article and the second silicone rubber article.

Figure 1 shows a partial cross section of a laminate article (100) prepared by the method described above. The laminate article (100) includes a silicone pressure sensitive (102) having a surface (102a) and an opposing surface (102b). The opposing surface (102b) of the silicone pressure sensitive (102) adheres to the surface (103a) of the silicone rubber article (103) with a peel adhesion of > 1,000 gf/in as measured by the test method described in the EXAMPLES, below. The silicone pressure sensitive (102) may have a thickness of 10 $\mu$m to 200 $\mu$m. The silicone pressure sensitive (102) adheres to a backing substrate (101) having a surface (101b). The surface (102a) of the silicone pressure sensitive (102) contacts the surface (101b) of the backing substrate (101). The backing substrate (101) may be selected from the group consisting of PE, PU, TPU, and TPE, which may have a thickness of 10 $\mu$m to 200 $\mu$m. The silicone rubber article (103) may be an LSR or an HCR, as described above.

The silicone pressure sensitive adhesive composition may be used in fabrication of the laminate article (100) via wet casting. For example, the silicone pressure sensitive adhesive composition may be applied to the surface (101b) of the backing substrate (101) and cured to form the silicone pressure sensitive adhesive (102). Alternatively, the silicone pressure sensitive adhesive composition may be applied to the surface (103a) of the silicone rubber article (103) and cured to form the silicone pressure sensitive adhesive (102). Alternatively, the silicone pressure sensitive adhesive composition may be applied to a surface of a release liner and cured to form the silicone pressure sensitive adhesive (102). Thereafter, the surface (103a) of the silicone rubber article (103) may be contacted with the opposing surface (102b) of the silicone pressure sensitive adhesive (102) and surface (101b) of the backing substrate (101) may be contacted with the surface (102a) of the silicone pressure sensitive adhesive (102). Pressure may be applied to adhere the layers of backing substrate (101), silicone pressure sensitive adhesive (102), and silicone rubber article (103) together.

Alternatively, wet casting may be used to prepare a laminate article comprising a backing substrate comprising a silicone rubber and a silicone pressure sensitive adhesive described above, and optionally, a (second) silicone rubber article. In this method, the backing substrate may be a silicone rubber article that is the same as or different from the (second) silicone rubber article used in step (11), described below. Alternatively, the backing substrate may comprise more than one material of construction, such as a mesh (which may be fabricated from a polymeric material, as described above) impregnated with a silicone rubber. This method for fabricating a laminate article comprises:

(1) combining, under conditions to effect condensation reaction, starting materials comprising

(P) a bis-hydroxyl-terminated polydiorganosiloxane with a weight average molecular weight of 10,000 g/mol to < 200,000 g/mol measured by GPC, where starting material (P) is present in an amount of > 20.5 weight % based on combined weights of starting materials (P) and (R);
(R) a hydroxyl-functional polyorganosilicate resin with a weight average molecular weight of 21,000 g/mol to 30,000 g/mol measured by GPC, where starting material (R) is present in an amount < 79.5 weight %, based on combined weights of starting materials (P) and (R);
(S) a solvent; and
optionally (N) a neutralizer; where
starting materials (R) and (P) and are present in a weight ratio (R)/(P) of 2.27/1 to < 3.88/1; thereby producing a reaction mixture; and

(2) adding (C) a condensation reaction catalyst to the reaction mixture, thereby producing a catalyzed reaction mixture;
(3) heating the catalyzed reaction mixture at a temperature of > RT to 145 °C and removing water;

optionally (4) recovering a condensation reaction product of (P) and (R);
optionally (5) adding up to 4 weight %, based on combined weights of (R) and (P), of (X) a peroxide crosslinking agent, thereby forming a silicone pressure sensitive adhesive composition;
optionally (6) treating a surface of a backing substrate comprising silicone rubber;

(7) coating the silicone pressure sensitive adhesive composition on the surface of the backing substrate;
(8) drying the silicone pressure sensitive adhesive composition, and
(9) curing the silicone pressure sensitive adhesive composition to form a silicone pressure sensitive adhesive having a surface adhered to the surface of the backing substrate, where the silicone pressure sensitive adhesive layer further comprises an opposing surface opposite the surface of the backing substrate. This method may optionally further comprise:
optionally (10) treating a surface of a silicone rubber article; and
(11) adhering the opposing surface of the silicone pressure sensitive adhesive and the surface of the silicone rubber article.

Figure 2 shows a partial cross section of a laminate article (200) prepared by the method described above. The laminate article (200) includes a silicone pressure sensitive (202) having a surface (202a) and an opposing surface (202b). The silicone pressure sensitive (202) may have a thickness of 10 μm to 200 μm. The silicone pressure sensitive (202) adheres to a backing substrate comprising silicone rubber (201) and having a surface (201b) with a peel adhesion of > 1,000 gf/in as measured by the test method described in the EXAMPLES, below. The surface (202a) of the silicone pressure sensitive (202) contacts the surface (201b) of the backing substrate (201). The backing substrate (201) may be a silicone rubber article such as an LSR or an HCR, as described above. Alternatively, the backing substrate (201) may comprise a mesh impregnated with a silicone rubber.

The silicone pressure sensitive adhesive composition may be used in fabrication of the laminate article (200) via wet casting. For example, the silicone pressure sensitive adhesive composition may be applied to the surface (201b) of the backing substrate (201) and cured to form the silicone pressure sensitive adhesive (202).

EXAMPLES

The following examples are provided to illustrate the invention to one skilled in the art and are not to be construed to limit the scope of the invention set forth in the claims. Starting materials used in these examples are described in Table 1.

Table 1 - Starting Materials

| Ingredient Type | Chemical Description, Chemical formula, or Structure | Source |
|---|---|---|
| Solvent 1 | Toluene, $PhCH_3$ | TDCC |
| Solvent 2 | Xylene, $(CH_3)_2C_6H_4$ | TDCC |
| MQ Resin 1 in Xylene | 68.36 wt% solid content of unit formula $M_{0.458}Q_{0.542}$. OH: 3.27 wt%. Mw: 8,475 g/mol. | DSC |
| MQ Resin 2 in Xylene | 71.89 wt% solid content of unit formula $M_{0.453}Q_{0.547}$. OH: 3.07 wt%. Mw: 21,350 g/mol. | DSC |

(continued)

| Ingredient Type | Chemical Description, Chemical formula, or Structure | Source |
|---|---|---|
| MQ Resin 3 in Xylene | 72.17 wt% solid content of unit formula $M_{0.454}Q_{0.546}$. OH: 3.13 wt%. Mw: 22,200 g/mol. | DSC |
| MQ Resin 4 in Xylene | 72.75 wt% solid content of unit formula $M_{0.431}Q_{0.569}$. OH: 3.44 wt%. Mw: 29,050 g/mol. | DSC |
| PDMS polymer 1 | Bis-hydroxyl-terminated polydimethylsiloxane with unit formula $HOD_{354}OH$. 100 wt% solid content. Mw: 41,400 g/mol. | DSC |
| PDMS polymer 2 | Bis-hydroxyl-terminated polydimethylsiloxane with unit formula $HOD_{612}OH$. 100 wt% solid content. Mw: 75,700 g/mol. | DSC |
| PDMS polymer 3 | Bis-hydroxyl-terminated polydimethylsiloxane with unit formula $HOD_{749}OH$. 100 wt% solid content. Mw: 104,000 g/mol. | DSC |
| PDMS polymer 4 | Bis-hydroxyl-terminated polydimethylsiloxane with unit formula $HOD_{1083}OH$. 100 wt% solid content. Mw: 135,000 g/mol. | DSC |
| PDMS polymer 5 | Bis-hydroxyl-terminated polydimethylsiloxane with unit formula $HOD_{3568}OH$. 100 wt% solid content. Mw: 390,000 g/mol. | DSC |
| Peroxide Crosslinking agent | Benzoyl peroxide of formula $(C_6H_5\text{-}C(=O)O\text{-})_2$ | Sigma |
| Condensation Catalyst | Benzoic acid of formula $C_6H_5CO_2H$ | ACROS |
| Catalyst 3 | Karstedt's catalyst (In a mixture of vinyl-endblocked PDMS) | SYL-OFF™ 4000 Catalyst from DSC |
| Neutralizer | A silyl phosphate comprising Bis(Trimethylsilyl) hydrogen phosphate (10%) dissolved in toluene | DSC |
| PSA 1 | DOWSIL™ 7657 Adhesive | DSC |
| PSA 2 | DOWSIL™ 7406-VLO Adhesive | DSC |
| 30-Durometer LSR | XIAMETER™ RBL-2004-30 Liquid Silicone Rubber, Part A | DSC |
| 30-Durometer LSR | XIAMETER™ RBL-2004-30 Liquid Silicone Rubber Part B | DSC |
| 50-Durometer LSR | XIAMETER™ RBL-2004-50 Liquid Silicone Rubber Part A | DSC |
| 50-Durometer LSR | XIAMETER™ RBL-2004-50 Liquid Silicone Rubber Part B | DSC |
| Peroxide cured HCR | XIAMETER™ RBB 2000-35 | DSC |
| Peroxide cured HCR | XIAMETER™ RBB 2001-65 | DSC |
| Peroxide cured HCR | Varox™ DBPH-50 | TDCC |
| Pt cure HCR | SILASTIC™ RBC 7600-50 | DSC |
| Release Liner | Commercially available fluorosilicone release coating on a PET backing substrate | SYL-OFF™ Q2-7785 Release Coating from DSC |

TDCC means The Dow Chemical Company of Midland, Michigan, USA. DSC means Dow Silicones Corporation of Midland, Michigan USA.

In this Reference Example 1, condensation reaction products (Bodied Resins) were prepared as follows: PDMS polymer, MQ resin, solvent, and neutralizer were combined in a three neck flask at RT. The contents of the flask were stirred at 250 rpm for 20 minutes using a stainless steel stir paddle in the middle neck. Condensation Catalyst was then added with stirring. Another neck was connected to a dean-stark trap and then condenser with city water cooling capability. The last neck contained a thermometer and nitrogen sweep adapter closing the system. Finally, the three-neck flask with the mixture inside was mounted on a heating mantle with temperature control and heated to a reaction temperature of 145 °C. The reaction continued for 3 hours starting from the beginning of refluxing. Bodied Resins IE1 to IE6 and CE1 to CE19 were prepared according to this procedure.

In this Reference Example 2, comparative silicone pressure sensitive adhesive composition CE20 was prepared as follows: Starting materials were added to a dental mixer cup and mixed for 30 seconds at 3500 rpm until homogeneous. This cold blend PSA was used immediately for coating/curing process.

In this Reference Example 3, the Peroxide Crosslinking agent was added to form the peroxide curable silicone pressure sensitive adhesive compositions, which were coated on backing substrates and cured as follows: For peroxide curable silicone pressure sensitive adhesive compositions (IE1 to IE6 and CE1 to CE21), Peroxide Crosslinking agent (in toluene) and solvent 1 were added to each composition prepared as described above Reference Examples 1 and 2 in a dental mixer cup to reach a 50 wt% solid level and a 2 wt% Peroxide Crosslinking agent level. For sample IE6, the Peroxide Crosslinking agent level was varied in the cure step (IE6A for 0 wt% Peroxide Crosslinking agent level, IE6B for 1 wt% Peroxide Crosslinking agent level, IE6C for 3 wt% Peroxide Crosslinking agent level). The resulting sample was mixed for 30 seconds at 3500 rpm until homogeneous. Each sample was prepared for application testing by coating on to a 2-mil (1 mil = 0,00254 cm) thick sheet of polyester (PET) using a 3-mil coating bar. Each sheet was then cured in an oven at 80°C for 2 minutes, followed by 180°C for 2 minutes.

In this Reference Example 4, comparative hydrosilylation-curable pressure sensitive adhesive composition CE22 was prepared as follows: The PSA was added to a dental mixer cup first. Next, catalyst 3 was added to the mixture and mixed for 30 seconds at 3500 rpm until homogeneous.

In this Reference Example 5, hydrosilylation-curable pressure sensitive adhesive composition CE22 was coated onto a 2-mil thick sheet of polyester (PET) using a 3-mil coating bar. Each sheet was then cured in an oven at cured at 150°C for 3 minutes.

The starting materials, and amounts used to prepare each sample, are shown below in Tables 2 to 7.

In this Reference Example 6, of silicone rubber substrates were fabricated as follows:

The liquid silicone rubber (LSR) substrates were from DSC, XIAMETER™ RBL-2004-30 LSR and XIAMETER™ RBL-2004-50 LSR samples. For mixing the Part A and Part B, 100 g of Part A and 100 g of Part B were added in a dental mixer cup and mixed for 3 cycles with each cycle running for 20 seconds at 1800 rpms. The cup was scraped and hand mixed between cycles to ensure material did not stick in the bottom and corners of the dental cup. This mixture was transferred to a polished book mold or Teflon lined chase and cured at 350 °F (176,7 °C) for 5 minutes.

Peroxide cured high-consistency rubber (HCR) substrates were prepared by blending 60 parts per hundred (phr) of XIAMETER™ RBB 2000-35 and 40 phr of XIAMETER™ RBB 2001-65 on two roll mill. 1.0 phr of Varox™ DBPH-50 (45 % 2,5-Dimethyl-2,5-di(t-butylperoxy)hexane, and 55% Calcium Carbonate/Silica) was milled into the blend. The material was sheeted off mill and placed in 10" X 10" X 0.78" chase and press cured for 10 minutes at 350 °F (176,7 °C) under 30 tons of pressure. Chase was removed from press, cooled, and slab removed from chase.

Platinum cured HCR substrates were prepared as follows: SILASTIC™ RBC 7600-50 was milled on two roll mill. Material was sheeted off mill and placed in 10" X 10" X 0.78" chase and press cured for 10 minutes at 350 °F (176,7 °C) under 30 tons of pressure. Chase was removed from press, cooled, and slab removed from chase.

In this Reference Example 7, adhesion of the pressure sensitive adhesives prepared according to Reference Examples 3 and 5 to the silicone rubbers prepared according to Reference Example 6 was measured as follows:

Peel Adhesion: Peel adhesion (180°) was tested according to PSTC-101 standards. The silicone pressure sensitive adhesive coated onto 2-mil polyester film (tape) was laminated onto the silicone rubber surface or a clean stainless steel panel typically after 1 day following cure. The silicone rubber surface was wiped with Isopropyl Alcohol to clean the surface and allowed to dry under ambient conditions for 5 minutes before the silicone pressure sensitive adhesive was laminated thereto. After laminating, a 2-kg rubber-coated roller was applied to the resulting article (back and forth five times each) and the article was left undisturbed for a dwell time of 20 minutes at room temperature before the peel adhesion test. ATMI Release and Adhesion Tester was used to pull a 1-inch (2,54 cm) wide tape from the silicone rubber or the stainless steel substrate at 12 inches per minute.

The adhesion test results are shown below in Tables 8 to 14.

Table 2 - Comparative Examples of Bodied Resins of Different Resin to Polymer Ratio.

| Starting material | Units | CE1 | CE2 | CE3 | CE4 | CE5 | CE6 |
|---|---|---|---|---|---|---|---|
| PDMS polymer 3 | g | 33.90 | 59.33 | 67.8 | 101.7 | 0 | 0 |

(continued)

| Starting material | Units | CE1 | CE2 | CE3 | CE4 | CE5 | CE6 |
|---|---|---|---|---|---|---|---|
| PDMS polymer 4 | g | 0 | 0 | 0 | 0 | 92.2 | 101.7 |
| MQ Resin 2 | g | 183.24 | 149.82 | 137.43 | 91.62 | 107.5 | 94.3 |
| Neutralizer | g | 0.03 | 0.03 | 0.03 | 0.03 | 0.03 | 0.03 |
| Condensation Catalyst | g | 0.6 | 0.6 | 0.6 | 0.6 | 0.6 | 0.6 |
| Solvent 2 | g | 82.23 | 90.24 | 93.85 | 106.05 | 99.7 | 103.4 |
| Calculations | | | | | | | |
| Resin/ polymer ratio | wt/wt | 79.5/20.5 | 64.5/35.5 | 59.3/40.7 | 39.3/60.7 | 45.6/54.4 | 40/60 |
| Resin/ Polymer ratio (normalized) | wt/wt | 3.88/1 | 1.82/1 | 1.46/1 | 0.65/1 | 0.84/1 | 0.67/1 |

Table 3 - Working Examples of Bodied Resins of Different Resin to Polymer Ratio

| Starting material | Units | IE 1 | IE2 | IE3 | IE4 |
|---|---|---|---|---|---|
| PDMS polymer 3 | g | 42.38 | 50.85 | 0 | 0 |
| PDMS polymer 4 | g | 0 | 0 | 42.38 | 50.85 |
| MQ Resin 2 | g | 171.79 | 160.34 | 171.79 | 160.34 |
| Neutralizer | g | 0.03 | 0.03 | 0.03 | 0.03 |
| Condensation Catalyst | g | 0.6 | 0.6 | 0.6 | 0.6 |
| Solvent 2 | g | 85.2 | 87.89 | 85.2 | 87.89 |
| Calculations | | | | | |
| Resin/ polymer ratio | wt/wt | 74.5/25.5 | 69.4/30.6 | 74.5/25.5 | 69.4/30.6 |
| Resin/ Polymer ratio (normalized) | wt/wt | 2.92/1 | 2.2711 | 2.92/1 | 2.27/1 |

Table 4 - Bodied Resins of Different Resin Mw.

| Starting Material | Units | IE5 | IE6 | CE7 |
|---|---|---|---|---|
| PDMS polymer 3 | g | 42.38 | 42.38 | 42.38 |
| MQ Resin 1 | g | 0 | 0 | 185.96 |
| MQ Resin 3 | g | 0 | 172.49 | 0 |
| MQ Resin 4 | g | 172.02 | 0 | 0 |
| Neutralizer | g | 0.03 | 0.03 | 0.03 |
| Condensation Catalyst | g | 0.6 | 0.6 | 0.6 |
| Solvent 2 | g | 84.97 | 84.5 | 71.03 |
| Calculations | | | | |
| Resin/polymer ratio | wt/wt | 74.7/25.3 | 74.6/25.4 | 75/25 |
| Resin/Polymer ratio (normalized) | wt/wt | 2.95/1 | 2.94/1 | 3/1 |

Table 5 - Comparative Examples of Bodied Resins using Polymers with Differing Mw Values

| Starting Material | Units | CE8 | CE9 | CE10 | CE11 | CE12 | CE13 |
|---|---|---|---|---|---|---|---|
| PDMS polymer 1 | g | 0 | 59.33 | 0 | 0 | 0 | 0 |
| PDMS polymer 2 | g | 59.33 | 0 | 101.7 | 101.7 | 0 | 0 |
| PDMS polymer 4 | g | 0 | 0 | 0 | 0 | 72.0 | 79.16 |
| MQ Resin 1 | g | 0 | 0 | 0 | 99.2 | 0 | 132.16 |

(continued)

| Starting Material | Units | CE8 | CE9 | CE10 | CE11 | CE12 | CE13 |
|---|---|---|---|---|---|---|---|
| MQ Resin 2 | g | 149.82 | 149.82 | 0 | 0 | 0 | 0 |
| MQ Resin 4 | g | 0 | 0 | 93.2 | 0 | 133.97 | 0 |
| Neutralizer | g | 0.03 | 0.03 | 0.03 | 0.03 | 0.03 | 0.03 |
| Condensation Catalyst | g | 0.6 | 0.6 | 0.6 | 0.6 | 0.6 | 0.6 |
| Solvent 2 | g | 90.24 | 90.24 | 104.5 | 98.5 | 93.37 | 88.05 |
| Calculations | | | | | | | |
| Resin/polymer ratio | wt/wt | 64.5/35.5 | 64.5/35.5 | 40/60 | 40/60 | 57.5/42.5 | 53.3/46.7 |
| Resin/polymer ratio (normalized) | wt/wt | 1.82/1 | 1.82/1 | 0.67/1 | 0.67/1 | 1.35/1 | 1.14/1 |

Table 6 - Additional Comparative Examples of Bodied Resins using Polymers with Differing Mw Values

| Starting Material | Units | CE14 | CE15 | CE16 | CE17 | CE18 | CE19 |
|---|---|---|---|---|---|---|---|
| PDMS polymer 5 | g | 42.38 | 50.85 | 101.7 | 59.33 | 101.7 | 42.38 |
| MQ Resin 1 | g | 185.96 | 0 | 0 | 0 | 99.2 | 0 |
| MQ Resin 2 | g | 0 | 160.34 | 0 | 149.82 | 0 | 176.83 |
| MQ Resin 4 | g | 0 | 0 | 93.2 | 0 | 0 | 0 |
| Neutralizer | g | 0.03 | 0.03 | 0.03 | 0.03 | 0 | 0.03 |
| Condensation Catalyst | g | 0.6 | 0.6 | 0.6 | 0.6 | 0 | 0.6 |
| Solvent 2 | g | 71.03 | 87.89 | 104.5 | 90.24 | 98.5 | 80.16 |
| Calculations | | | | | | | |
| Resin/polymer ratio | wt/wt | 75/25 | 69.4/30.6 | 40/60 | 64.5/35.5 | 40/60 | 75/25 |
| Resin/polymer ratio (normalized) | wt/wt | 3/1 | 2.27/1 | 0.67/1 | 1.82/1 | 0.67/1 | 3/1 |

Samples CE14 to CE19 uses a high Mw gum (instead of a polydiorganosiloxane polymer) in formulating the silicone pressure sensitive adhesive composition, and these samples showed decreased adhesion in comparison with sample IE1, which used a polydiorganosiloxane polymer as described herein. Samples CE8 to CE18 all showed poor adhesion under the conditions tested.

Table 7 - Commercial PSA Samples and PSA Sample Made by Cold Blending

| Starting Material | Units | CE20 | CE21 | CE22 |
|---|---|---|---|---|
| PDMS polymer 3 | g | 1.39 | 0 | 0 |
| PSA 1 | g | 0 | 0 | 15.0 |
| PSA 2 | g | 0 | 15.0 | 0 |
| MQ Resin 2 | g | 5.82 | 0 | 0 |
| Solvent 2 | g | 2.79 | 0 | 0 |
| Catalyst 3 | g | 0 | 0 | 0.06 |
| Calculations | | | | |
| Resin/polymer ratio | wt/wt | 75/25 | ND | ND |
| Resin/polymer ratio (normalized) | wt/wt | 3/1 | ND | ND |

Table 8 - Comparative Examples Peel Adhesion Test Results of Silicone Pressure Sensitive Adhesives Prepared with Bodied Resins of Different Resin to Polymer Ratio. It is noted that in the present specification 1 gf/in equals 0,3861 n/m.

| Measurement | Units | CE1 | CE2 | CE3 | CE4 | CE5 | CE6 |
|---|---|---|---|---|---|---|---|
| Peel Adhesion from 3 0-Durometer LSR | gf/in | 0 (PSA is glassy) | 769±52 | 350±28 | 131±5 | 242 ±14 | 149±12 |
| Peel Adhesion from 50-Durometer LSR | gf/in | 0 (PSA is glassy) | 540±24 | 523±42 | 133±7 | 267 ±16 | 152±10 |
| Peel Adhesion from peroxide cured HCR | gf/in | 0 (PSA is glassy) | 681±28 | 493±32 | N/A | N/A | N/A |
| Peel Adhesion from Pt cure HCR | gf/in | 0 (PSA is glassy) | 651±89 | 321±35 | N/A | N/A | N/A |
| Peel Adhesion from stainless steel | gf/in | 0 (PSA is glassy) | 2001 ±78 | 1492 ±78 | 273 ±16 | 502 ±33 | 332±11 |

Table 9 - Working Examples Peel Adhesion Test Results of Silicone Pressure Sensitive Adhesives Prepared with Bodied Resins of Different Resin to Polymer Ratio.

| Measurement | Units | IE1 | IE2 | IE3 | IE4 |
|---|---|---|---|---|---|
| Peel Adhesion from 30-Durometer LSR | gf/in | 1754±57 | 1217±67 | 1578±75 | 950±127 |
| Peel Adhesion from 50-Durometer LSR | gf/in | 2352±141 | 1397±172 | 2081±225 | 1141±128 |
| Peel Adhesion from peroxide cured HCR | gf/in | 1804±203 | 1210±154 | N/A | N/A |
| Peel Adhesion from Pt cure HCR | gf/in | 2144±241 | 1388±113 | N/A | N/A |
| Peel Adhesion from stainless steel | gf/in | 0 (PSA is glassy) | 0 (PSA is glassy) | 0 (PSA is glassy) | 0 (PSA is glassy) |

The data in Tables 8 and 9 showed that increasing resin to polymer ratio increased the adhesion to silicone rubbers under the conditions tested. The PSA made with a high resin to polymer did not have adhesion to steel substrates, but had high adhesion to the silicone rubber substrates, under the conditions tested.

Table 10 - Peel Adhesion Test Results of Silicone Pressure Sensitive Adhesives Prepared with Bodied Resins of Differing Resin Mw.

| Measurement | Units | IE5 | IE6 (2% peroxide) | CE7 | IE6A (0% peroxide) | IE6B (1% peroxide) | IE6C (3% peroxide) |
|---|---|---|---|---|---|---|---|
| Peel Adhesion from 30-Durometer LSR | gf/in | 1921±99 | 1994±81 | 218±16 | 2155±90 | 2082±97 | 1641±152 |
| Peel Adhesion from 50-Durometer LSR | gf/in | 2477±173 | 2271±164 | 237±18 | 2538±123 | 2572±103 | 2140±106 |
| Peel Adhesion from peroxide cured HCR | gf/in | 1885±171 | 2229±285 | 120±11 | N/A | 2182±119 | N/A |
| Peel Adhesion from Pt cure HCR | gf/in | 2457±156 | 1961±204 | 116±8 | N/A | 3421±378 | N/A |
| Peel Adhesion from stainless steel | gf/in | 0 (PSA is glassy) | 0 (PSA is glassy) | PSA cohesive failure | 0 (PSA is glassy) | 0 (PSA is glassy) | 0 (PSA is glassy) |

The data in Table 10 shows that the use of high Mw resin resulted in PSAs with strong adhesion to silicone rubbers. However, the use of a resin that had an Mw that was too low resulted in a PSA (CE7) that had poor adhesion under the conditions tested. Without wishing to be bound by theory, it is thought that IE6, IE6A, IE6B, and IE6C show that a lower amount of peroxide crosslinking agent (0 - 2 % in samples IE6A, IE6, and IE6B) may provide higher peel adhesion to LSRs.

Table 11 - Peel Adhesion Test Results of Silicone Pressure Sensitive Adhesives Prepared with Bodied Resins of Differing Polymer Mw.

| Measurement | Units | CE8 | CE9 | CE10 | CE11 | CE12 | CE13 |
|---|---|---|---|---|---|---|---|
| Peel Adhesion from 30-Durometer LSR | gf/in | 684±51 | 709±17 | 124 ±4 | 130±7 | 480±33 | 153±9 |
| Peel Adhesion from 50-Durometer LSR | gf/in | 737±27 | 614±30 | 134 ±6 | 139±7 | 595±15 | 327±26 |
| Peel Adhesion from peroxide cured HCR | gf/in | N/A | N/A | N/A | N/A | N/A | N/A |
| Peel Adhesion from Pt cure HCR | gf/in | N/A | N/A | N/A | N/A | N/A | N/A |
| Peel Adhesion from stainless steel | gf/in | 2007 ±84 | 1667 ±42 | 116±7 | PSA cohesive failure | 1311±79 | PSA cohesive failure |

Table 12 - Additional Peel Adhesion Test Results of Silicone Pressure Sensitive Adhesives Prepared with Bodied Resins of Differing Polymer Mw.

| Measurement | Units | CE14 | CE15 | CE16 | CE17 | CE18 | CE19 |
|---|---|---|---|---|---|---|---|
| Peel Adhesion from 30-Durometer LSR | gf/in | 253±12 | 488±10 | 163±9 | 328±14 | 81±4 | 691±34 |
| Peel Adhesion from 50-Durometer LSR | gf/in | 219±13 | 668±19 | 209±6 | 196±22 | 89±6 | 919±57 |
| Peel Adhesion from peroxide cured HCR | gf/in | N/A | N/A | N/A | N/A | N/A | 733±53 |
| Peel Adhesion from Pt cure HCR | gf/in | N/A | N/A | N/A | N/A | N/A | 973±92 |
| Peel Adhesion from stainless steel | gf/in | PSA cohesive failure | 0 (PSA is glassy) | 389 ±38 | 1739 ±49 | 161 ±7 | 0 (PSA is glassy) |

The data in Tables 9, 11, and 12 shows that under the conditions tested, the use of the polydiorganosiloxane polymers as described herein results in a PSA with strong adhesion to silicone rubbers (IE1). However, the use of high Mw gum polymer results in poor adhesion (CE19). Other comparative example compositions (CE) show that low resin to polymer ratio, low Mw resin, or high Mw gum polymer in the PSA leads to poor adhesion to silicone rubbers.

Table 13 - Peel Adhesion Test Results of Commercial PSA Samples and PSA Sample Made by Cold Blending.

| Measurement | Units | CE20 | CE21 | CE22 |
|---|---|---|---|---|
| Peel Adhesion from 30-Durometer LSR | gf/in | 107±31 | 269±28 | 39±5 |
| Peel Adhesion from 50-Durometer LSR | gf/in | 29±6 | 499±14 | 147±26 |
| Peel Adhesion from peroxide cured HCR | gf/in | N/A | 555±19 | 243±19 |
| Peel Adhesion from Pt cure HCR | gf/in | N/A | 395±29 | 163±17 |
| Peel Adhesion from stainless steel | gf/in | 0 (PSA is glassy) | 1356±69 | 1787±92 |

Without wishing to be bound by theory, it is thought that the data in Table 13 showed that PSA samples made via cold blending showed poor adhesion to silicone rubbers under the conditions tested.

Table 14 - Peel Adhesion Test Results of 3M Commercial 9731 Tapes.

| Measurement | Units | CE23 |
|---|---|---|
| Peel Adhesion from 30-Durometer LSR | gf/in | 794±44 |
| Peel Adhesion from 50-Durometer LSR | gf/in | 1047±79 |
| Peel Adhesion from peroxide cured HCR | gf/in | 1132±59 |
| Peel Adhesion from Pt cure HCR | gf/in | 1157±57 |
| Peel Adhesion from stainless steel | gf/in | 1132±56 |

The Working Examples (IE1, IE3, IE5, and IE6) showed approximately doubled adhesion strength to silicone rubber as compared to VS 3M commercial 9731 tapes.

In this Reference Example 8, samples of laminate articles were prepared in a method involving wet casting (method 2) as follows:

1. Two samples of silicone pressure sensitive adhesive compositions were prepared by mixing Peroxide Crosslinking agent (in toluene) and solvent 1 and each of composition IE6 and CE21 (prepared as described above) in a dental mixer cup to reach a 50 wt% solid level and a 2 wt% Peroxide Crosslinking agent level. Each resulting sample was mixed for 30 seconds at 3500 rpm until homogeneous.
2. Four sheets of silicone rubber substrates (two each of a 50-Durometer LSR and a Pt cure HCR) were prepared as described above in Reference Example 6. A surface of each silicone rubber substrate was cleaned by wiping with isopropyl alcohol and allowing to dry under ambient conditions for 5 minutes.
3. Each sample of a silicone pressure sensitive adhesive composition was coated on a cleaned surface of a silicone rubber substrate using a 3-mil coating bar. Each coated substrate was then placed in an oven at 80°C for 2 minutes, followed by 180°C for 2 minutes to prepare a laminate of (cured) silicone pressure sensitive adhesive layer on each silicone rubber sheet.
4. Four sheets of silicone rubber substrates (two each of a 50-Durometer LSR and a Pt cure HCR) were prepared as described above in Reference Example 6. A surface of each silicone rubber substrate was cleaned by wiping with isopropyl alcohol and allowing to dry under ambient conditions for 5 minutes.
5. One day following step 3, the surface of each silicone pressure sensitive adhesive layer was contacted with the cleaned surface of each silicone rubber substrate from step 4. A 2-kg rubber-coated roller was applied to the resulting article (back and forth five times each), and the article was left undisturbed for a dwell time of 20 minutes at room temperature before the peel adhesion test according to PSTC-101 standards, as described above, except that the polyester film backing substrate was not used. A TMI Release and Adhesion Tester was used to pull a 1-inch wide tape from the silicone rubber substrate at 12 inches per minute. Peel adhesion test results are shown below in Table 15.

Table 15 - Peel Adhesion Test Results for Laminate Articles Prepared According to Reference Example 8 (Wet Casting)

| Measurement | Units | IE6 (Method 2 Wet Casting) | CE21 (Method 2 Wet Casting) |
|---|---|---|---|
| Peel Adhesion from 50-Durometer LSR | gf/in | 2416±76 | 228±8 |
| Peel Adhesion from Pt cure HCR | gf/in | 1499±29 | 468±12 |

The data in Table 15 show that when a silicone rubber article is used as the backing substrate in a method using wet casting, the silicone pressure sensitive adhesive prepared by the method described herein has higher peel adhesion than the commercially available PSA 2 (CE21) applied to the backing substrate using the wet casting method.

In this Reference Example 9, samples of laminate articles were prepared by a method including dry casting (Method 3) as follows:

1. Two samples of silicone pressure sensitive adhesive compositions were prepared by mixing Peroxide Crosslinking agent (in toluene) and solvent 1 and each of composition IE6 and CE21 (prepared as described above) in a dental mixer cup to reach a 50 wt% solid level and a 2 wt% Peroxide Crosslinking agent level. Each resulting sample was mixed for 30 seconds at 3500 rpm until homogeneous.
2. Each sample of a silicone pressure sensitive adhesive composition was coated on a fluorosilicone release liner using a 3-mil coating bar. Each coated liner was then placed in an oven at 80 °C for 2 minutes, followed by 180 °C for 2 minutes to

prepare a laminate of (cured) silicone pressure sensitive adhesive layer on each fluorosilicone release liner. Each laminate was aged for 1 day at RT.

3. Four sheets of silicone rubber substrates (two each of a 50-Durometer LSR and a Pt cure HCR) were prepared as described above in Reference Example 6. A surface of each silicone rubber substrate was cleaned by wiping with isopropyl alcohol and allowing to dry under ambient conditions for 5 minutes.

4. The surface of each silicone pressure sensitive adhesive layer from step 2 was contacted with the cleaned surface of each silicone rubber substrate from step 3.

5. Four sheets of silicone rubber substrates (two each of a 50-Durometer LSR and a Pt cure HCR) were prepared as described above in Reference Example 6. A surface of each silicone rubber substrate was cleaned by wiping with isopropyl alcohol and allowing to dry under ambient conditions for 5 minutes.

6. One day following step 4, the fluorosilicone release liner was removed from each laminate, and the resulting exposed surface of each silicone pressure sensitive adhesive layer was contacted with the cleaned surface of a silicone rubber substrate from step 5. A 2-kg rubber-coated roller was applied to the resulting article (back and forth five times each), and the article was left undisturbed for a dwell time of 20 minutes at room temperature before the peel adhesion test according to PSTC-101 standards was performed, as described above, except that the polyester film backing substrate was not used. A TMI Release and Adhesion Tester was used to pull a 1-inch wide tape from the silicone rubber substrate at 12 inches per minute. Peel adhesion test results are shown below in Table 16.

Table 16 - Peel Adhesion Test Results for Laminate Articles Prepared According to Reference Example 9 (Dry Casting)

| Measurement | Units | IE6 (Method 3 Dry Casting) | CE21 (Method 3 Dry Casting) |
|---|---|---|---|
| Peel Adhesion from 50-Durometer LSR | gf/in | 1388±149 | 321±7 |
| Peel Adhesion from Pt cure HCR | gf/in | 1428±96 | 311±41 |

The data in Table 16 show that when a laminate article including a silicone pressure sensitive adhesive between two silicone rubber substrates is prepared by a dry casting method, the silicone pressure sensitive adhesive prepared by the method described herein has higher peel adhesion than the commercially available PSA 2 (CE21).

*Definitions and Usage* of *Terms*

All amounts, ratios, and percentages are by weight unless otherwise indicated. The amounts of all starting materials in a composition total 100% by weight. The articles 'a', 'an', and 'the' each refer to one or more, unless otherwise indicated by the context of specification. The singular includes the plural unless otherwise indicated. The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Abbreviations used herein are defined in Table 17.

Table 17 - Abbreviations

| Abbreviation | Definition |
|---|---|
| ° C | Degrees Celsius |
| COD | cyclooctadiene |
| cSt | centistokes |
| D | a difunctional siloxane unit of formula ($Me_2SiO_{2/2}$) |

(continued)

| Abbreviation | Definition |
|---|---|
| DP | average degree of polymerization |
| DSC | Dow Silicones Corporation of Midland, Michigan, USA |
| g | gram |
| gf/in | gram force per inch |
| GPC | Gel permeation chromatography |
| HCR | high consistency rubber |
| in | inch |
| LSR | liquid silicone rubber |
| m | meter |
| M | a monofunctional siloxane unit of formula ($Me_3SiO_{1/2}$) |
| Me | methyl |
| min | minutes |
| Mn | number average molecular weight |
| mol | mole |
| mPa·s | milli Pascal seconds |
| Mw | weight average molecular weight measured by GPC |
| PDMS | polydimethylsiloxane |
| Ph | phenyl |
| ND | Not Determined |
| Q | a tetrafunctional siloxane unit of formula ($SiO_{4/2}$) |
| RF | release force |
| rpm | Revolutions per minute |
| RT | room temperature of 25 ± 2 °C |
| TDCC | The Dow Chemical Company of Midland, Michigan, USA |
| um or μm | micrometer |
| Vi | vinyl |
| wt | weight |
| Pt | platinum |

The Mn, Mw, and molecular weight distribution of the Polymer and condensation reaction product may be determined by GPC using an Agilent Technologies 1260 Infinity chromatograph and toluene as a solvent. The instrument is equipped with two PLgel Mixed C columns. Calibration was made using polystyrene standards. Samples were made by dissolving polymer in toluene (~10 mg/mL) and then immediately analyzing the material by GPC (1mL/min flow and 45 °C column temperature).

The Mn, Mw, and molecular weight distribution of the Resin may be determined by GPC using an Agilent Technologies 1260 Infinity chromatograph and ethyl acetate as a solvent. The instrument is equipped with two columns, Agilent PLgel Mixed-D and PLgel Mixed-E columns. Calibration was made using polystyrene standards. Samples were made by dissolving polymer in toluene (~20 mg/mL) and then immediately analyzing the material by GPC (1mL/min flow and 35 °C column temperature).

## Claims

1. A method for fabricating a laminate article, the method comprising:

(1) combining, under conditions to effect condensation reaction, starting materials comprising

(P) a bis-hydroxyl-terminated polydiorganosiloxane with a weight average molecular weight of 10,000 g/mol to < 200,000 g/mol measured by GPC, where starting material (P) is present in an amount of > 20.5 weight % based on combined weights of starting materials (P) and (R);
(R) a hydroxyl-functional polyorganosilicate resin with a weight average molecular weight of 21,000 g/mol to 30,000 g/mol measured by GPC, where starting material (R) is present in an amount < 79.5 weight %, based on combined weights of starting materials (P) and (R);
(S) a solvent; and

optionally (N) a neutralizer; where
starting materials (R) and (P) and are present in a weight ratio (R)/(P) of 2.27/1 to < 3.88/1; thereby producing a reaction mixture; and

(2) adding (C) a condensation reaction catalyst to the reaction mixture, thereby producing a catalyzed reaction mixture;
(3) heating the catalyzed reaction mixture at a temperature of > RT to 145 °C and removing water;
optionally (4) recovering a condensation reaction product of (P) and (R);
optionally (5) adding up to 4 weight %, based on combined weights of (R) and (P), of (X) a peroxide crosslinking agent, thereby forming a silicone pressure sensitive adhesive composition;
optionally (6) treating a surface of a backing substrate;
(7) coating the silicone pressure sensitive adhesive composition on the surface of the backing substrate,
(8) drying the silicone pressure sensitive adhesive composition,
(9) curing the silicone pressure sensitive adhesive composition to form a silicone pressure sensitive adhesive having a surface adhered to the surface of the backing substrate, where the silicone pressure sensitive adhesive layer further comprises an opposing surface opposite the surface of the backing substrate;
optionally (10) treating a surface of a silicone rubber article; and
(11) adhering the opposing surface of silicone pressure sensitive adhesive and the surface of the silicone rubber article.

2. The method of claim 1, where starting material (P), the bis-hydroxyl-terminated polydiorganosiloxane, has formula

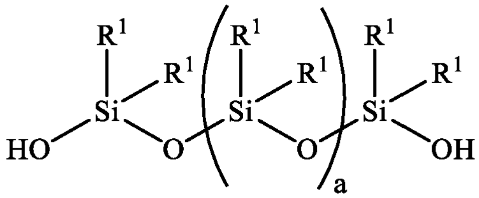

,

where each $R^1$ is an independently selected alkyl group of 1 to 6 carbon atoms, and subscript a represents average number of difunctional siloxane units per molecule, and $250 \leq a \leq 3{,}000$,

3. The method of claim 1, where starting material (R), the hydroxyl-functional polyorganosilicate resin, has unit formula $(R^1_3SiO_{1/2})_b(SiO_{4/2})_c(HO_{1/2})_d$, where each $R^1$ is an independently selected alkyl group of 1 to 6 carbon atoms, subscripts b and c represent mole fractions of monofunctional and tetrafunctional units, respectively, and subscripts b and c have values such that $0.4 \leq b \leq 0.5$, $0.5 \leq c \leq 0.6$, and a quantity $(b + c) = 1$; subscript d represents a quantity of hydroxyl groups in the resin, and subscript d has a value sufficient to provide the resin with a hydroxyl content of 2 weight % to 5 weight %.

4. The method of claim 1, where (R)/(P) is 2.9/1 to < 3.88/1.

5. The method of claim 4, where (R)/(P) is 2.9/1 to 3/1.

6. The method of claim 1, where (N) the neutralizer is present and, the neutralizer comprises a silyl phosphate.

7. The method of claim 1, where (C) the condensation reaction catalyst is an acid.

**8.** The method of claim 1, where step (5) is present, and (X) the peroxide crosslinking agent comprises benzoyl peroxide.

**9.** The method of claim 1, where step (6) is present, and step (6) comprises applying a primer to the surface of the backing substrate.

**10.** The method of claim 1, where step (10) is present, and step (10) comprises cleaning the surface of the silicone rubber with an alcohol.

**11.** The method of claim 1, where in step (11), the silicone rubber has a durometer of 30 to 50.

**12.** A laminate article prepared by the method of any one of claims 1 to 11.

**13.** The method of claim 1, where the backing substrate in step (7) comprises a release liner, and the method further comprises:

removing the release liner after step (9);
optionally (12) treating a surface of a second silicone rubber article; and
(13) adhering the surface of the silicone pressure sensitive adhesive layer to the surface of the second silicone rubber article.

**14.** A method for fabricating a laminate article, the method comprising:

(1) combining, under conditions to effect condensation reaction, starting materials comprising

(P) a bis-hydroxyl-terminated polydiorganosiloxane with a weight average molecular weight of 10,000 g/mol to < 200,000 g/mol measured by GPC, where starting material (P) is present in an amount of > 20.5 weight % based on combined weights of starting materials (P) and (R);
(R) a hydroxyl-functional polyorganosilicate resin with a weight average molecular weight of 21,000 g/mol to 30,000 g/mol measured by GPC, where starting material (R) is present in an amount < 79.5 weight %, based on combined weights of starting materials (P) and (R);
(S) a solvent; and
optionally (N) a neutralizer; where
starting materials (R) and (P) and are present in a weight ratio (R)/(P) of 2.27/1 to < 3.88/1; thereby producing a reaction mixture; and

(2) adding (C) a condensation reaction catalyst to the reaction mixture, thereby producing a catalyzed reaction mixture;
(3) heating the catalyzed reaction mixture at a temperature of > RT to 145 °C and removing water;
optionally (4) recovering a condensation reaction product of (P) and (R);
optionally (5) adding up to 4 weight %, based on combined weights of (R) and (P), of (X) a peroxide crosslinking agent, thereby forming a silicone pressure sensitive adhesive composition;
optionally (6) treating a surface of a backing substrate comprising a silicone rubber;
(7) coating the silicone pressure sensitive adhesive composition on the surface of the backing substrate;
(8) drying the silicone pressure sensitive adhesive composition, and
(9) curing the silicone pressure sensitive adhesive composition to form a silicone pressure sensitive adhesive layer having a surface adhered to the surface of the backing substrate, where the silicone pressure sensitive adhesive layer further comprises an opposing surface opposite the surface of the backing substrate.

**15.** The method of claim 14, further comprising:

optionally (10) treating a surface of a silicone rubber article; and
(11) adhering the opposing surface of silicone pressure sensitive adhesive layer and the surface of the silicone rubber article.

**Patentansprüche**

**1.** Verfahren zum Herstellen eines laminierten Gegenstandes, das Verfahren umfassend:

(1) Kombinieren unter Bedingungen, die eine Kondensationsreaktion bewirken, von Ausgangsmaterialien, umfassend

(P) ein bis-Hydroxyl-terminiertes Polydiorganosiloxan mit einem gewichtsmittleren Molekulargewicht von 10.000 g/mol bis < 200.000 g/mol, gemessen durch GPC, wobei das Ausgangsmaterial (P) in einer Menge von > 20,5 Gewichtsprozent, basierend auf kombinierten Gewichten der Ausgangsmaterialien (P) und (R), vorhanden ist;

(R) ein hydroxylfunktionelles Polyorganosilikatharz mit einem gewichtsmittleren Molekulargewicht von 21.000 g/mol bis 30.000 g/mol, gemessen durch GPC, wobei das Ausgangsmaterial (R) in einer Menge von < 79,5 Gewichtsprozent, basierend auf kombinierten Gewichten der Ausgangsmaterialien (P) und (R), vorhanden ist;

(S) ein Lösungsmittel; und

optional (N) ein Neutralisationsmittel; wobei

Ausgangsmaterialien (R) und (P) und in einem Gewichtsverhältnis (R)/(P) von 2,27/1 bis < 3,88/1 vorhanden sind; wodurch eine Reaktionsmischung produziert wird; und

(2) Hinzufügen (C) eines Kondensationsreaktionskatalysators zu der Reaktionsmischung, wodurch eine katalysierte Reaktionsmischung produziert wird;

(3) Erhitzen der katalysierten Reaktionsmischung bei einer Temperatur von > RT auf 145 °C und Entfernen von Wasser;

optional (4) Gewinnen eines Kondensationsreaktionsprodukts von (P) und (R);

optional (5) Hinzufügen von bis zu 4 Gew.-%, basierend auf kombinierten Gewichten von (R) und (P), (X) eines Peroxid-Vernetzungsmittels, wodurch eine Silikonhaftklebstoffzusammensetzung ausgebildet wird;

optional (6) Behandeln einer Oberfläche eines Trägersubstrats;

(7) Aufbringen der Silikonhaftklebstoffzusammensetzung auf die Oberfläche des Trägersubstrats,

(8) Trocknen der Silikonhaftklebstoffzusammensetzung,

(9) Aushärten der Silikonhaftklebstoffzusammensetzung, um einen Silikonhaftklebstoff auszubilden, der eine Oberfläche aufweist, die an der Oberfläche des Trägersubstrats haftet, wobei die Silikonhaftklebstoffschicht ferner eine gegenüberliegende Oberfläche umfasst, die der Oberfläche des Trägersubstrats gegenüberliegt;

optional (10) Behandeln einer Oberfläche eines Silikonkautschukgegenstandes; und

(11) Haften der gegenüberliegenden Oberfläche des Silikonhaftklebstoffs an die Oberfläche des Silikonkautschukgegenstandes.

2. Verfahren nach Anspruch 1, wobei das Ausgangsmaterial (P), das bis-Hydroxyl-terminierte Polydiorganosiloxan, die Formel

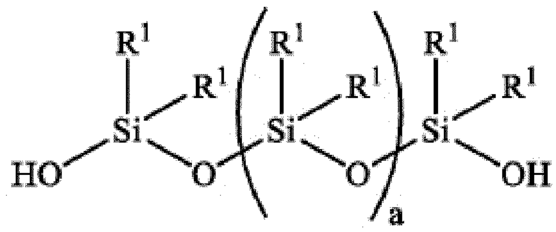

aufweist, wobei jedes $R^1$ eine unabhängig ausgewählte Alkylgruppe mit 1 bis 6 Kohlenstoffatomen ist und ein Index a eine durchschnittliche Anzahl von difunktionellen Siloxaneinheiten pro Molekül darstellt und $250 \leq a \leq 3.000$.

3. Verfahren nach Anspruch 1, wobei das Ausgangsmaterial (R), das hydroxylfunktionelle Polyorganosilikatharz, die Einheitsformel $(R^1{}_3SiO_{1/2})_b(SiO_{4/2})_c(HO_{1/2})_d$ aufweist, wobei jedes $R^1$ eine unabhängig ausgewählte Alkylgruppe mit 1 bis 6 Kohlenstoffatomen ist, die Indizes b und c Molenbrüche von monofunktionellen beziehungsweise tetrafunktionellen Einheiten darstellen und die Indizes b und c derartige Werte aufweisen, dass $0,4 \leq b \leq 0,5$, $0,5 \leq c \leq 0,6$ und eine Menge $(b + c) = 1$; Index d eine Menge an Hydroxylgruppen in dem Harz darstellt und Index d einen Wert aufweist, der ausreicht, um dem Harz einen Hydroxylgehalt von 2 Gewichtsprozent bis 5 Gewichtsprozent bereitzustellen.

4. Verfahren nach Anspruch 1, wobei (R)/(P) 2,9/1 bis < 3,88/1 ist.

5. Verfahren nach Anspruch 4, wobei (R)/(P) 2,9/1 bis < 3/1 ist.

6. Verfahren nach Anspruch 1, wobei (N) das Neutralisationsmittel vorhanden ist und das Neutralisationsmittel ein Silylphosphat umfasst.

7. Verfahren nach Anspruch 1, wobei (C) der Kondensationsreaktionskatalysator eine Säure ist.

8. Verfahren nach Anspruch 1, wobei Schritt (5) vorhanden ist und (X) das Peroxid-Vernetzungsmittel Benzoylperoxid umfasst.

9. Verfahren nach Anspruch 1, wobei Schritt (6) vorhanden ist und Schritt (6) ein Auftragen eines Primers auf die Oberfläche des Trägersubstrats umfasst.

10. Verfahren nach Anspruch 1, wobei Schritt (10) vorhanden ist und Schritt (10) ein Reinigen der Oberfläche des Silikonkautschuks mit einem Alkohol umfasst.

11. Verfahren nach Anspruch 1, wobei in Schritt (11) der Silikonkautschuk ein Durometer von 30 bis 50 aufweist.

12. Laminierter Gegenstand, der durch das Verfahren nach einem der Ansprüche 1 bis 11 gefertigt wird.

13. Verfahren nach Anspruch 1, wobei das Trägersubstrat in Schritt (7) eine Trennfolie umfasst, und das Verfahren ferner umfasst:

Entfernen der Trennfolie nach Schritt (9);
optional (12) Behandeln einer Oberfläche eines zweiten Silikonkautschukartikels; und
(13) Haften der Oberfläche der Silikonhaftklebstoffschicht an die Oberfläche des zweiten Silikonkautschukgegenstandes.

14. Verfahren zum Herstellen eines laminierten Gegenstandes, das Verfahren umfassend:

(1) Kombinieren unter Bedingungen, die eine Kondensationsreaktion bewirken, von Ausgangsmaterialien, umfassend
(P) ein bis-Hydroxyl-terminiertes Polydiorganosiloxan mit einem gewichtsmittleren Molekulargewicht von 10.000 g/mol bis < 200.000 g/mol, gemessen durch GPC, wobei das Ausgangsmaterial (P) in einer Menge von > 20,5 Gewichtsprozent, basierend auf kombinierten Gewichten der Ausgangsmaterialien (P) und (R), vorhanden ist;
(R) ein hydroxylfunktionelles Polyorganosilikatharz mit einem gewichtsmittleren Molekulargewicht von 21.000 g/mol bis 30.000 g/mol, gemessen durch GPC, wobei das Ausgangsmaterial (R) in einer Menge von < 79,5 Gewichtsprozent, basierend auf kombinierten Gewichten der Ausgangsmaterialien (P) und (R), vorhanden ist;
(S) ein Lösungsmittel; und
optional (N) ein Neutralisationsmittel; wobei
Ausgangsmaterialien (R) und (P) und in einem Gewichtsverhältnis (R)/(P) von 2,27/1 bis < 3.88/1 vorhanden sind; wodurch eine Reaktionsmischung produziert wird; und
(2) Hinzufügen (C) eines Kondensationsreaktionskatalysators zu der Reaktionsmischung, wodurch eine katalysierte Reaktionsmischung produziert wird;
(3) Erhitzen der katalysierten Reaktionsmischung bei einer Temperatur von > RT auf 145 °C und Entfernen von Wasser;
optional (4) Gewinnen eines Kondensationsreaktionsprodukts von (P) und (R);
optional (5) Hinzufügen von bis zu 4 Gew.-%, basierend auf kombinierten Gewichten von (R) und (P), (X) eines Peroxid-Vernetzungsmittels, wodurch eine Silikonhaftklebstoffzusammensetzung ausgebildet wird;
optional (6) Behandeln einer Oberfläche eines Trägersubstrats, umfassend einen Silikonkautschuk;
(7) Aufbringen der Silikonhaftklebstoffzusammensetzung auf die Oberfläche des Trägersubstrats;
(8) Trocknen der Silikonhaftklebstoffzusammensetzung, und
(9) Aushärten der Silikonhaftklebstoffzusammensetzung, um eine Silikonhaftklebstoffschicht auszubilden, die eine Oberfläche aufweist, die an der Oberfläche des Trägersubstrats haftet, wobei die Silikonhaftklebstoffschicht ferner eine gegenüberliegende Oberfläche umfasst, die der Oberfläche des Trägersubstrats gegenüberliegt;.

15. Verfahren nach Anspruch 14, ferner umfassend:

optional (10) Behandeln einer Oberfläche eines Silikonkautschukgegenstandes; und
(11) Haften der gegenüberliegenden Oberfläche der Silikonhaftklebstoffschicht an die Oberfläche des Silikonkautschukgegenstandes.

## Revendications

1. Procédé permettant de fabriquer un article stratifié, le procédé comprenant :

(1) la combinaison, dans des conditions permettant d'obtenir une réaction de condensation, de matières premières comprenant
(P) un polydiorganosiloxane à terminaison bis-hydroxyle ayant une masse moléculaire moyenne en poids de 10 000 g/mol à < 200 000 g/mol mesurée par GPC, où la matière première (P) est présente en une quantité de > 20,5 % en poids sur la base des poids combinés des matières premières (P) et (R) ;
(R) une résine de polyorganosilicate à fonctionnalité hydroxyle ayant une masse moléculaire moyenne en poids de 21 000 g/mol à 30 000 g/mol mesurée par GPC, où la matière de départ (R) est présente en une quantité < 79,5 % en poids, sur la base des poids combinés des matières de départ (P) et (R) ;
(S) un solvant ; et

facultativement (N) un agent neutralisant ; où
les matières premières (R) et (P) et sont présentes dans un rapport en poids (R)/(P) de 2,27/1 à < 3,88/1 ; permettant ainsi de produire un mélange réactionnel ; et

(2) l'ajout de (C) un catalyseur de réaction de condensation au mélange réactionnel, permettant ainsi de produire un mélange réactionnel catalysé ;
(3) le chauffage du mélange réactionnel catalysé à une température comprise entre > TA et 145 °C et l'élimination de l'eau ;

facultativement (4) la récupération d'un produit de réaction de condensation de (P) et (R) ;
facultativement (5) l'ajout jusqu'à 4 % en poids, sur la base des poids combinés de (R) et (P), de (X) un agent de réticulation de type peroxyde, permettant ainsi de former une composition adhésive de silicone, sensible à la pression ;
facultativement (6) le traitement d'une surface d'un substrat de support ;

(7) l'application en revêtement de la composition adhésive de silicone, sensible à la pression, sur la surface de support,
(8) le séchage de la composition adhésive de silicone, sensible à la pression,
(9) le durcissement de la composition adhésive de silicone, sensible à la pression, pour former un adhésif de silicone, sensible à la pression, dont une surface adhère à la surface du substrat de support, où la couche d'adhésif silicone, sensible à la pression, comprend en outre une surface opposée, à l'opposé de la surface du substrat de support ;
facultativement (10) le traitement d'une surface d'un article en caoutchouc de silicone ; et
(11) le collage de la surface opposée de l'adhésif silicone, sensible à la pression, et de la surface de l'article en caoutchouc de silicone.

2. Procédé selon la revendication 1, dans lequel la matière première (P), le polydiorganosiloxane à terminaison bis-hydroxyle, a la formule

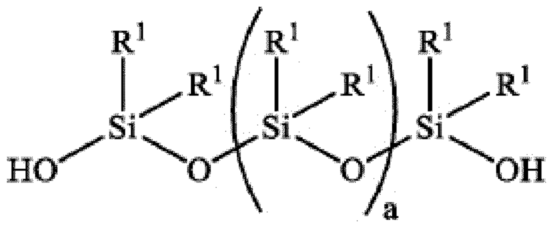

,

où chaque $R^1$ est un groupe alkyle de 1 à 6 atomes de carbone choisi indépendamment, et l'indice a représente le nombre moyen de motifs siloxane difonctionnel par molécule, et $250 \leq a \leq 3\ 000$.

3. Procédé selon la revendication 1, où la matière première (R), la résine polyorganosilicate à fonctionnalité hydroxyle, a la formule unitaire $(R^1_3SiO_{1/2})_b(SiO_{4/2})_c(HO_{1/2})_d$, où chaque $R^1$ est un groupe alkyle de 1 à 6 atomes de carbone choisi indépendamment, les indices b et c représentent des fractions molaires de motifs monofonctionnels et

tétrafonctionnels, respectivement, et les indices b et c ont des valeurs telles que $0,4 \leq b \leq 0,5$, $0,5 \leq c \leq 0,6$, et une quantité $(b + c) = 1$ ; l'indice d représente une quantité de groupes hydroxyle dans la résine, et l'indice d a une valeur suffisante pour que la résine ait une teneur en hydroxyle de 2 % en poids à 5 % en poids.

**4.** Procédé selon la revendication 1, où (R)/(P) est compris entre 2,9/1 et < 3,88/1.

**5.** Procédé selon la revendication 4, où (R)/(P) est compris entre 2,9/1 et 3/1.

**6.** Procédé selon la revendication 1, où (N) l'agent neutralisant est présent, et l'agent neutralisant comprend un phosphate de silyle.

**7.** Procédé selon la revendication 1, où (C) le catalyseur de réaction de condensation est un acide.

**8.** Procédé selon la revendication 1, où l'étape (5) est présente, et (X) l'agent de réticulation de type peroxyde comprend du peroxyde de benzoyle.

**9.** Procédé selon la revendication 1, dans lequel l'étape (6) est présente, et l'étape (6) comprend l'application d'un apprêt sur la surface du substrat de support.

**10.** Procédé selon la revendication 1, où l'étape (10) est présente, et l'étape (10) comprend le nettoyage de la surface du caoutchouc de silicone avec un alcool.

**11.** Procédé selon la revendication 1, où, à l'étape (11), le caoutchouc de silicone a un duromètre de 30 à 50.

**12.** Article laminé préparé par le procédé selon l'une quelconque des revendications 1 à 11.

**13.** Procédé selon la revendication 1, où le substrat de support à l'étape (7) comprend un revêtement antiadhésif, et le procédé comprend en outre :

le retrait du revêtement antiadhésif après l'étape (9) ;
facultativement (12) le traitement d'une surface d'un second article en caoutchouc de silicone ; et

(13) le collage de la surface de la couche adhésive silicone, sensible à la pression, à la surface du second article en caoutchouc de silicone.

**14.** Procédé permettant de fabriquer un article stratifié, le procédé comprenant :

(1) la combinaison, dans des conditions permettant d'obtenir une réaction de condensation, de matières premières comprenant
(P) un polydiorganosiloxane à terminaison bis-hydroxyle ayant une masse moléculaire moyenne en poids de 10 000 g/mol à < 200 000 g/mol mesurée par GPC, où la matière première (P) est présente en une quantité de > 20,5 % en poids sur la base des poids combinés des matières premières (P) et (R) ;
(R) une résine de polyorganosilicate à fonctionnalité hydroxyle ayant une masse moléculaire moyenne en poids de 21 000 g/mol à 30 000 g/mol mesurée par GPC, où la matière de départ (R) est présente en une quantité < 79,5 % en poids, sur la base des poids combinés des matières de départ (P) et (R) ;
(S) un solvant ; et

facultativement (N) un agent neutralisant ; où
les matières premières (R) et (P) et sont présentes dans un rapport en poids (R)/(P) de 2,27/1 à < 3,88/1 ;
permettant ainsi de produire un mélange réactionnel ; et

(2) l'ajout de (C) un catalyseur de réaction de condensation au mélange réactionnel, permettant ainsi de produire un mélange réactionnel catalysé ;
(3) le chauffage du mélange réactionnel catalysé à une température comprise entre > TA et 145 °C et l'élimination de l'eau ;

facultativement (4) la récupération d'un produit de réaction de condensation de (P) et (R) ;
facultativement (5) l'ajout jusqu'à 4 % en poids, sur la base des poids combinés de (R) et (P), de (X) un agent

de réticulation de type peroxyde, permettant ainsi de former une composition adhésive de silicone, sensible à la pression ;
facultativement (6) le traitement d'une surface d'un substrat de support comprenant un caoutchouc de silicone ;

(7) l'application en revêtement de la composition adhésive de silicone, sensible à la pression, sur la surface de support ;
(8) le séchage de la composition adhésive de silicone, sensible à la pression, et
(9) le durcissement de la composition adhésive de silicone, sensible à la pression, pour former une couche adhésive de silicone, sensible à la pression, dont une surface adhère à la surface du substrat de support, où la couche d'adhésif silicone, sensible à la pression, comprend en outre une surface opposée à l'opposé de la surface du substrat de support.

**15.** Procédé selon la revendication 14, comprenant en outre :
facultativement (10) le traitement d'une surface d'un article en caoutchouc de silicone ; et
(11) le collage de la surface opposée de la couche adhésive de silicone, sensible à la pression, et de la surface de l'article en caoutchouc de silicone.

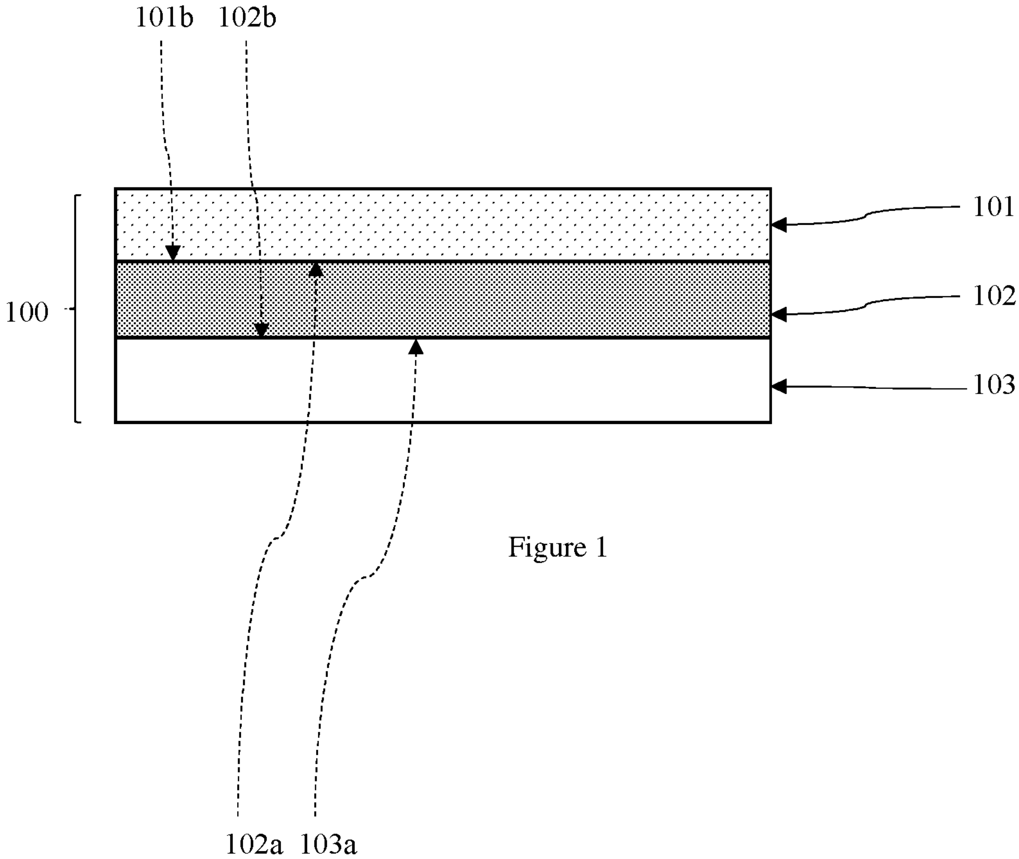


Figure 1

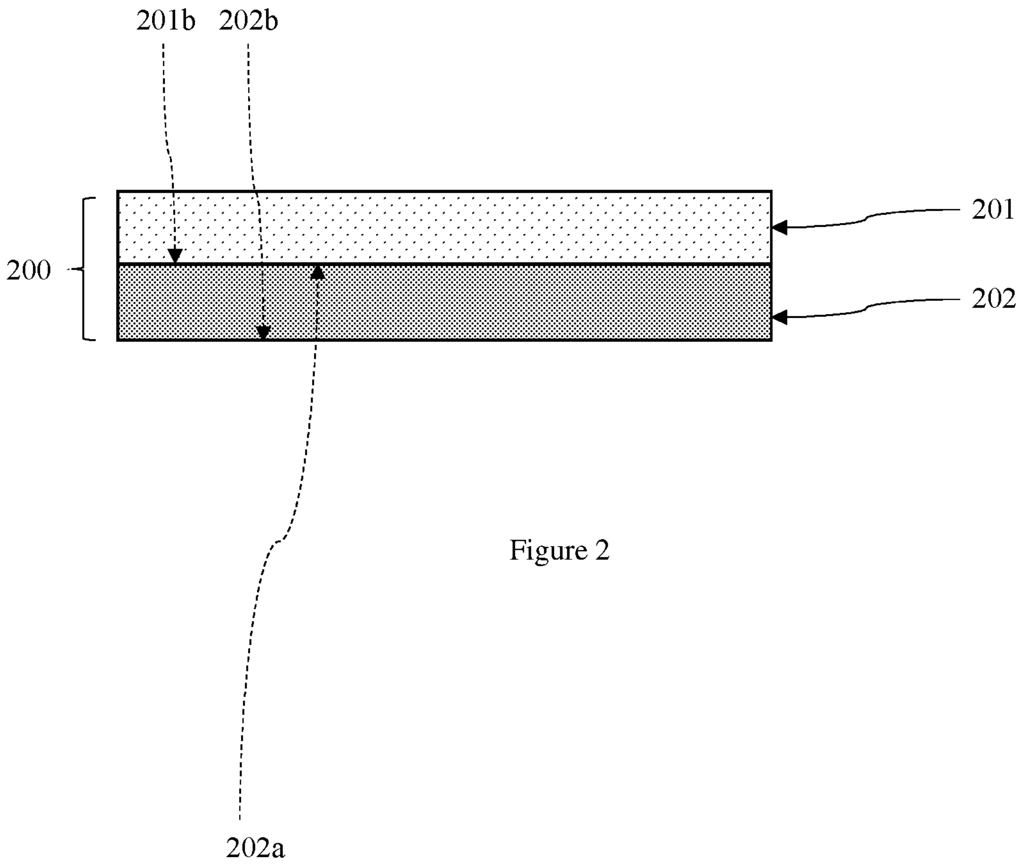


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8247502 B
- US 5726256 A
- US 5916981 A, Cifuentes
- US 2676182 A, Daudt
- US 4611042 A, Rivers-Farrell
- US 4774310 A, Butler
- US 5777002 A, Conway
- US 8198357 B, Jeram
- US 8859693 B, Hasegawa
- US 8853332 B, Akitomo